# EUROPEAN PATENT SPECIFICATION

(11) **EP 2 331 623 B1**
(45) Date of publication and mention of the grant of the patent: **28.11.2012**
(21) Application number: 09792470.8
(22) Date of filing: 11.09.2009
(51) Int. Cl.: B32B 27/18, C08J 3/20, C08L 29/04, C08K 5/098

(54) **ETHYLENE VINYL ALCOHOL COMPOSITION WITH METAL CARBOXYLATE**
ETHYLENVINYLALKOHOLZUSAMMENSETZUNG MIT METALLCARBOXYLAT
COMPOSITION D'ÉTHYLÈNE ALCOOL DE VINYLE COMPRENANT UN CARBOXYLATE DE MÉTAL

(30) Priority: 12.09.2008 US 96558 P
(43) Date of publication of application: 15.06.2011
(73) Proprietor: E. I. du Pont de Nemours and Company, Wilmington, DE 19898 (US)
(72) Inventor: URADNISHECK, Julius, Glen Mills, Pennsylvania 19342 (US)
(74) Representative: Dannenberger, Oliver Andre
(86) International application number: PCT/US2009/056676
(87) International publication number: WO 2010/030892

(56) References cited:
- US-A- 5 032 632
- US-A1- 2001 025 087
- US-A1- 2005 096 419
- US-B1- 6 242 087

## Description

The invention relates to a composition comprising ethylene vinyl alcohol copolymer and metal carboxylate, articles comprising the composition and methods for preparing the composition.

### Background

Ethylene vinyl alcohol copolymer (EVOH) is a useful polymeric material having good oxygen barrier properties, oil resistance, antistatic properties and mechanical strength, and is widely used for various wrapping and packaging materials such as films, sheets, containers, etc. In many cases, EVOH is used as one layer in a multilayer structure. For example, EVOH may be coextruded together with a substrate of polyolefin resin or the like to give multilayer structures in which the EVOH layer and the substrate resin layer are bonded to each other via an adhesive layer therebetween. In those structures, therefore, EVOH is required to have high interlayer adhesiveness.

EVOH may be produced from a precursor polymer, such as ethylene vinyl acetate. Melt viscosity of EVOH typically increases with time, especially when processed at elevated temperature. Increase in viscosity may cause gelation or solidification of molten EVOH. Such behavior may result in metal surfaces of processing equipment becoming coated with a varnish-like layer of intractable, discolored, degraded polymer thereby causing a gradual rise in torque required for extruder screws and, when exfoliated, the sporadic appearance of gel particles in the extruded product. Thus it may be desirable to obtain EVOH that is free of gel particles and does not exhibit such viscosity increase, and more desirable that it exhibits a decrease in viscosity (viscosity drop) when heated to elevated temperature.

US4753760 discloses a process for preparing pellets of a hydrolyzed ethylene-vinyl acetate copolymer by extruding a methanol or a water-methanol solution including a lubricant that is being a member selected from the group consisting of a saturated fatty acid amide, an unsaturated fatty acid amide, a bis-fatty acid amide, a metal salt of fatty acid and a polyolefin. See also, JP64-69653, US5118743, US5360670, JP62-143954, US5118743, and US5360670.

US6432552 discloses an EVOH pellet characterized in a viscosity and torque change ratio wherein the pellet carries a higher fatty acid alkaline earth salt having 12 to 18 carbon atoms adhering to the surface of said EVOH pellet in an amount of 30 to 300 ppm based on the EVOH pellet.

US5032632 discloses EVOH compositions containing monovalent or divalent metal salt of an aliphatic carboxylic acid and hindered phenolic antioxidant. US6232382 discloses EVOH compositions containing acetic acid and magnesium acetate or calcium acetate; and optionally a boron compound and/or sodium acetate with examples showing a viscosity drop behavior and reduced formation rate for gels. US4613644 (equivalent to JP60-199040) discloses a resinous composition composed of a thermoplastic resin, an EVOH copolymer and a low-molecular weight salt or oxide containing at least one element selected from Groups I to III, provides molded items which are free of fish eyes. US7064158 discloses an EVOH composition including transition metal salt or metal salt of higher aliphatic carboxylic acid. US2005/0096419 also discloses EVOH compositions containing alkali salts or alkaline earth salts with carboxylic acid and phosphates that have a resistance to the formation of gels. None of these references disclose the possibility of reducing the gel that is already present in the EVOH resin.

EVOH is also known to have poor adhesive property, particularly to nonpolar polymers, and efforts to improve such adhesion include incorporating metallic salts of higher fatty acids, metallic oxides, metallic hydroxides, metallic carbonates, metallic sulfates and metallic silicates into at least one layer (e.g., JP54-87783) (for laminated structures). See also, US6485842 and US6485842.

However, with EVOH having inherently poor adhesion, a calcium carboxylate level required for the goal viscosity-drop which is necessary for avoiding the formation of gel causes poorer adhesion in EVOH. Furthermore the alkali salt needed for adhesion may cause an excessive viscosity drop. Finally there is needed a method for removing gel already present in an EVOH composition. Therefore, it is desirable to improve the adhesive property of an EVOH having freedom from gel and the formation of gel comparable to that of prior EVOH resins.

### Summary of the Invention

A composition comprises, consists essentially of, consists of, or is produced from an ethylene vinyl alcohol copolymer, comprising about 20 to about 50 %, by weight of the copolymer, of repeat units derived from ethylene;
at least one alkali metal salt, wherein the total of alkali metal ions present in the composition is 1 µeq/g to 10 µeq/g, based on micro-equivalents of alkali metal ion per gram (µeq/g) of the composition;
at least one alkaline earth metal salt, wherein the total of alkaline earth metal ions present in the composition is 0.5 µeq/g to 2.5 µeq/g, based on micro-equivalents of alkaline earth metal ion per gram of the composition; and
at least one carboxylate moiety having 3 to 18 carbon atoms, wherein the total carboxylate moieties having 3 to 18 carbon atoms present in the composition is 0.5 µeq/g to 7 µeq/g, based on micro-equivalents of carboxylate per gram of the composition.

An article comprises the composition described above, including a monolayer or multilayer structure that may be in the form of a film, sheet, tube, bottle, container, pipe, fiber, tray, or cup.

A method for preparing an ethylene vinyl alcohol copolymer composition described above, comprises contacting a first composition comprising an ethylene vinyl alcohol copolymer, comprising about 20 to about 50 %, by weight of the copolymer, of repeat units derived from ethylene, with a combination comprising at least one alkali metal salt; at least one alkaline earth metal salt; at least one carboxylate moiety having 3 to 18 carbon atoms; and optionally an ethylene vinyl alcohol copolymer comprising about 20 to about 50 % of repeat units derived from ethylene, by weight of the copolymer; wherein the ratio of the at least one alkali metal salt to the at least one alkaline earth metal salt in the combination is from about 2 to about 20 equivalents and the ratio of the at least one carboxylate moiety to the at least one alkaline earth metal salt is about 1 to about 15 equivalents.

A composition that may be used as a concentrate comprises an ethylene vinyl alcohol copolymer, comprising about 20 to about 50 %, by weight of the copolymer, of repeat units derived from ethylene; at least one alkali metal salt; at least one alkaline earth metal salt; and at least one carboxylate moiety having 3 to 18 carbon atoms; wherein the ratio of the at least one alkali metal salt to the at least one alkaline earth metal salt is from about 2 to about 20 equivalents and the ratio of the at least one carboxylate moiety to the at least one alkaline earth metal salt is about 1 to about 15 equivalents and wherein the total of alkaline earth metal ions present in the composition is about 0.5 µeq/g to about 250 µeq/g, based on micro-equivalents of alkaline earth metal ion per gram of the composition.

A method for preparing a modified ethylene vinyl alcohol copolymer composition comprises melt mixing a first composition comprising an ethylene vinyl alcohol copolymer, comprising about 20 to about 50 %, by weight of the copolymer, of repeat units derived from ethylene, with a combination comprising at least one alkaline earth metal carboxylate having 3 to 18 carbon atoms; optionally at least one alkali metal salt; and optionally an ethylene vinyl alcohol copolymer comprising about 20 to about 50 % of repeat units derived from ethylene, by weight of the copolymer; to provide a modified ethylene vinyl alcohol copolymer composition wherein the total carboxylate moieties having 3 to 18 carbon atoms present is about 0.5 µeq/g to about 10 µeq/g, based on micro-equivalents of carboxylate per gram of the composition; and wherein the modified ethylene vinyl alcohol copolymer composition has reduced gels compared to the first composition.

### Detailed Description of the Invention

A mixture of alkali metal and alkaline earth metal carboxylate additives provides improved properties for EVOH. For example, use of a combination of alkali metal salts such as sodium carboxylate and alkaline earth metal carboxylate such as calcium carboxylate allows attainment of the desired viscosity drop behavior and provides improved adhesion of EVOH to that of prior EVOH resins.

The amount of viscosity drop may be characterized by comparing the viscosity of an EVOH composition after processing for a given time at a given temperature to the viscosity at a shorter time. For example, the viscosity measured after about 60 minutes of mixing at 250°C may be compared to the viscosity measured after about 30 minutes of mixing at 250°C (viscosity ratio). A viscosity ratio greater than 1 indicates increased viscosity; less than 1 indicates decreased viscosity. When the ratio is greater than 1 the sample is believed to be experiencing crosslinking which can eventually cause visible gel particles or fisheyes. Gel particles are undesirable for film applications for EVOH for aesthetic reasons. Gel may also harm the oxygen barrier value due to the formation of tiny holes in the EVOH layer. When the ratio is less than 1.0, the sample may be experiencing chain scission of the EVOH molecule, which may be helpful to minimizing gel formation during the melt processing of EVOH over long durations into films and possibly for reducing the population of visible gel particles.

Viscosity ratios much above 2 may be undesirable because they indicate the possibility of the gradual generation of gel in EVOH over long periods of time. Such situations happen with commercial extrusion runs lasting weeks wherein gel can develop on the walls of extruders and eventually slough off into the extruded product. Ratios that are low such as below 0.1 may also be undesirable because the melt viscosity of EVOH will change if the extrusion rate changes. For example lower production rates would normally give higher residence time for the melt and thereby give lower viscosity EVOH delivered at the die resulting in a change in the dimensions of the extruded article.

The temperatures used for extruding EVOH sheet can vary from about 200°C to 300°C. The rate of the drop in molecular weight of EVOH due to the combination of alkali metal salt, alkaline earth metal salt and carboxylate is proportional to the melt temperature. For example, compositions processed at 250°C may have high rates of viscosity drop, but negligible viscosity drop at 220°C. That variation and the variations in the residence times of EVOH mean the range of acceptable viscosity drop is high.

The composition may have viscosity or torque ratio under such conditions in the range of 0.1 to 2; 0.3 to 1.1; or 0.8 to 1. A desirable viscosity ratio (determined as described above) may be 0.3 to 1.2, 0.5 to 1.0, or 0.7 to 0.95, such as 0.8 to 0.95 or 0.85 to 0.95.

Without being held to any theory, carboxylate salts may cause chain scission of EVOH when heated above the melting point of EVOH. The rate and extent of chain scission appears to increase with increasing amounts of carboxylate. Factors such as increased alkalinity might further accelerate chain scission. Similarly, increased acidity may slow chain scission and/or increase the rate of cross linking which slows the drop of melt viscosity. The amount of additives needed for desired viscosity behavior and low gel formation may be dependent on the overall acid-base properties of the EVOH. Viscosity behavior, gel formation and adhesion may also be influenced by the overall level and types of salts present in the EVOH composition.

EVOH polymers generally have ethylene content of about 15 to about 60 mole % or about 20 to about 50 mole % such as 28, 32, 38, 44 or 48 mole %, or about 28 to about 48 mole %. The density of commercially available EVOH generally ranges from between about 1.12 g/cm³ to about 1.20 gm/cm³ and the polymers have a melting temperature ranging from between about 142°C and 191°C. The weight average molecular weight, M_{w}, of the EVOH component, calculated from the degree of polymerization and the molecular weight of the repeating unit may be within the range of about 5,000 to about 300,000 Daltons or about 60,000 Daltons.

The EVOH copolymers may include comonomers as copolymerizable components. Examples of the comonomers are, for instance, α-olefins such as propylene, isobutene, α-octene, α-dodecene and α-octadecene, unsaturated carboxylic acids, salts, partially or completely alkylated esters, nitriles, amides, anhydrides, unsaturated sulfonic acids, the salts thereof, and the like. The comonomer may be present from 0.1 to 10%, when present, or from 0.5 to 5 mole %.

EVOH copolymers may be prepared by well-known techniques or may be obtained from commercial sources. EVOH copolymers may be prepared by saponifying or hydrolyzing ethylene vinyl acetate copolymers. Thus EVOH may also be known as hydrolyzed ethylene vinyl acetate (HEVA) copolymer. The degree of hydrolysis is preferably from about 50 to 100 mole percent, more preferably from about 85 to 100 mole %, such as 95%. Alternatively, EVOH copolymers may be prepared by treating the ethylene-vinyl acetate copolymers with alkali catalysts such as sodium methoxide or sodium hydroxide in methanol and neutralizing them. This process causes a transesterification reaction. When the desired high degree of conversion to ethylene vinyl alcohol polymer has been achieved, the catalyst is neutralized by addition of a slight excess of an acid such as acetic acid, and the EVOH is precipitated by mixing or contacting the reaction solution with water or a weak alcohol-water solution. The resulting porous particles are filtered from the slurry and purified of alcohol and salt by-products (e.g. sodium acetate) by washing with water acidified to a pH of 4-5 with certain weak aqueous acids in a final washing step before drying. Variations on this synthesis route are well known to those of skill in the art. Depending on the process conditions, various small amounts of salts such as sodium acetate may be present in the EVOH composition as a result.

Suitable EVOH polymers may be obtained from Eval America (Houston, TX), Nippon Synthetic Chemical Industry Co., Ltd (Japan), or Kuraray Company of Japan under the tradename EVAL. EVOH is also available under the tradename SOARNOL from Noltex L.L.C. Examples of such EVOH resins include those sold under the tradename EVAL or EVAL SP obtained from Eval Company of America or Kuraray Company of Japan. Examples of such EVOH resins include EVAL F101, EVAL F171, EVAL E105, EVAL J102, and EVAL SP 521, EVAL SP 292 and EVAL SP 482. Other EVOH resins include SOARNOL DT2903, SOARNOL DC3203 and SOARNOL ET3803.

Alkali metal salts contain ions include lithium, sodium, potassium, rubidium and/or cesium salts. The alkali metal salts used in the composition may include alkali metal halides such as NaCl, alkali metal phosphate compounds such as sodium phosphate, lithium phosphate, disodium phosphate and monobasic sodium phosphate, sodium dihydrogenphosphate, potassium dihydrogenphosphate, disodium hydrogenphosphate, or dipotassium hydrogenphosphate, alkali metal-boron compounds such as alkali metal salts of the boric acids, borax, sodium borohydride and the like. Examples of the alkali metal salt also include sodium acetate and potassium acetate.

Examples also include sodium metasilicate, calcium disodium Ethylenediaminetetraacetate (EDTA), the sodium salt of sulfated castor oil, Coconut Oil, fatty acids, sodium salts of fatty acids, disodium EDTA, monosodium citrate, monosodium phosphate, derivatives of mono- and diglycerin, riboflavin sodium phosphate, sodium 2-ethylhexyl sulfate, sodium alginate, sodium benzoate, sodium bicarbonate, sodium bisulfate, sodium bisulfite, sodium carbonate, sodium citrate, sodium diacetate, sodium distearyl phosphate, sodium formate, sodium gluconate, sodium hydroxide, sodium hypophosphite, sodium iodide, sodium lactate, sodium lauryl sulfate, sodium nitrite, sodium oleate, sodium palmitate, sodium potassium tartrate, sodium propionate, sodium salicylate, sodium sesquicarbonate, sodium tartrate, sodium thiosulfate, aluminum potassium silicate, lithium caprate, lithium iodide, lithium neodecanoate, lithium palmitate, lithium stearate, ammonium potassium hydrogen phosphate, castor oil potassium soap, dipotassium citrate, dipotassium EDTA, potassium EDTA, tetrapotassium EDTA, monopotassium citrate, sulfated oleic acid potassium salt, potassium acid tartrate, potassium alginate, potassium benzoate, potassium bicarbonate, potassium carbonate, potassium chloride, potassium citrate, potassium hydroxide, sodium hypophosphite, potassium iodate, potassium iodide, potassium lactate, potassium persulfate, tribasic potassium phosphate, potassium propionate, potassium ricinoleate, potassium sulfate, sodium potassium tartrate, and tripotassium citrate.

Alkaline earth metal salts are those such that the metal ions comprise alkaline earth metal ions, including magnesium, calcium, strontium, and/or barium salts. The alkaline earth metal salts used in the composition may include halides such as CaCl₂, alkaline earth metal phosphate compounds such as calcium phosphate, monobasic calcium phosphate, dibasic calcium phosphate, and tribasic calcium phosphate. Examples also include calcium bromide, calcium carbonate, calcium glycerophosphate, calcium iodate, calcium oxide, calcium sulfate, magnesium carbonate, magnesium chloride, magnesium hydroxide, magnesium oxide, magnesium phosphate, dibasic magnesium phosphate, tribasic magnesium sulfate, calcium disodium EDTA, and calcium EDTA.

Preferably, the alkaline earth metal salts are added to the composition as alkaline earth metal carboxylate, especially carboxylate with 3 to 18 carbon atoms, including magnesium or calcium carboxylates, with calcium carboxylates more preferred. Examples include calcium 2-ethylhexoate, calcium acetate, calcium alginate, calcium benzoate, calcium caprate, calcium caprylate, calcium citrate, calcium gluconate, calcium isodecanoate, calcium isostearate, calcium lactate, calcium myristate, calcium naphthenate, calcium neodecanoate, calcium oleate, calcium palmitate, calcium pantothenate, calcium propionate, calcium stearate, calcium stearoyl-2-lactylate, calcium zinc stearate, calcium or magnesium salts of vegetable fatty acids, magnesium 2-ethylhexoate, magnesium caprate, magnesium caprylate, magnesium citrate, magnesium glycerophosphate, magnesium isodecanoate, magnesium lauryl sulfate, magnesium linoleate, magnesium naphthenate, magnesium neodecanoate, magnesium oleate, magnesium palmitate, magnesium ricinoleate, magnesium salicylate, magnesium stearate, calcium zinc salt of rosin, and magnesium salts of soybean oil fatty acids.

The carboxylate salts used as additives for EVOH are prepared from organic acids having 3 to 18 carbon atoms. They are preferably monobasic (one carboxylic acid moiety in each molecule), but polybasic acids may also be used, including dicarboxylic acids such as tartaric acid, fumaric acid, citric acid, aconitic acid and adipic acid.

Examples of aliphatic organic acids include C₂ to C₂₄ or C₃ to C₁₈ (such as C₃₋₉, C₄₋₁₈, or C₆₋₉) acids. The acids are optionally substituted on the longest carbon chain with from one to three substituents independently selected from the group consisting of C₁-C₈ alkyl or hydroxy. Examples of these organic acids include, but are not limited to, propionic acid, caproic acid, caprylic acid, capric acid, lauric acid, stearic acid, isostearic acid, oleic acid, palmitic acid, linoleic acid, or combinations of two or more thereof. Saturated organic acids, such as stearic acid and caprylic acid may be preferred. Aromatic acids such as benzoic acid and naphthanoic acid may also be used.

Organic acids may be commercially available as a mixture of a named organic acid and a number of structurally different organic acids of varying lesser amounts. When a composition comprises a named acid or its salt, other unnamed acids may be present at levels conventionally known to be present in commercial supplies of the named acid or salt.

Salts of any of these organic acids include the alkali metal salts (i.e. alkali metal carboxylates), such that the metal ions comprise alkali metal ions, including lithium, sodium, potassium, rubidium and/or cesium salts. Preferred alkali metal carboxylates include lithium, sodium or potassium carboxylates.

Alkaline earth metal carboxylates include magnesium or calcium carboxylates, with calcium carboxylates more preferred. Examples include calcium caprylate and calcium stearate.

The composition may be prepared by blending the components by any means known to one skilled in the art, e.g., surface coating of resin pellets for future melt-mixing or dry blending/mixing, extrusion, coextrusion, to produce the composition. The composition may be a pellet blend, a dry blend, a surface coated pellet with some or all of the additive components or a melt extruded blend. The composition may be prepared by a combination of heating and mixing (melt-mixing or melt-blending). For example, the component materials may be mixed to be substantially dispersed or homogeneous using a melt-mixer such as a single or twin-screw extruder, blender, Buss Kneader (Coperion SA, Switzerland), double helix Atlantic mixer, Banbury mixer, roll mixer, etc., to give a resin composition. Alternatively, a portion of the component materials may be mixed in a melt-mixer, and the rest of the component materials subsequently added and further melt-mixed until substantially dispersed or homogeneous. The additives may also be surface coated on the resin and thereby subsequently mixed into the resin during the melt processing used for converting pellets into finished articles.

For example, the combination of alkali metal salt, alkaline earth metal salt and carboxylate may be added to a base EVOH resin by melt mixing the components in a batch mixing device such as a Haake mixer, a continuous twin screw or single screw extruder or the like.

Alternatively, a concentrate of alkali metal salt, alkaline earth metal salt and carboxylate in an EVOH copolymer composition may be prepared and the concentrate may be added to additional EVOH copolymer to prepare the final composition.

Concentrates may be prepared wherein the amounts of alkali metal salt, alkaline earth metal salt and carboxylate are from 2 times to 100 times (such as 5 times, 10 times, 20 times or 50 times) the amounts desired in the final EVOH composition. Preferred concentrates may include 20 to 50 times the amounts desired in the final EVOH composition.

The rate and extent of EVOH cleavage increase as the total equivalents of salts and especially carboxylates increase. For example, an unmodified EVOH sample of 32% ethylene content has a viscosity ratio of about 3 at the test conditions described above of 250°C; the same EVOH with 12 µEq of calcium carboxylate has a viscosity ratio of 0.65; and with 12 µEq of calcium carboxylate and additional 4.4 µEq of sodium acetate has a viscosity ratio near 0. Another non-modifed EVOH has a viscosity ratio of about 2; the same EVOH with 12 µEq of sodium acetate has a viscosity ratio of 0.40.

There might be EVOH molecular weight reduction if a concentrate having large concentrations of the additives was prepared at 250°C, leading to undesirably large viscosity drops. That cleavage may result in a melt of the concentrate that could not be strand pelletized and/or result in poor toughness in any EVOH resin to which the concentrate were added. To avoid excessive EVOH molecular weight reduction, concentrates may be prepared at lower temperatures than would be used for processing of the final composition with concentrations of the additives as described above. A concentrate made using temperatures at or below about 220°C may provide satisfactory performance.

Alkaline earth metal carboxylates may be added to the methanolic solvent carrying the EVOH in the polymerization and hydrolysis process. The thick liquid may be extruded into water to harden the EVOH and draw off the solvent. The alkaline earth metal carboxylate would be adsorbed into the EVOH solids during this operation The resulting modified EVOH may be cut up and washed with water.

Alternatively a combination of alkali metal salt, alkaline earth metal salt and carboxylate may be sprayed onto the EVOH pellets during the final steps of polymerization process. In some cases, one or more of the components of the combination may be mixed in the EVOH and the remaining component(s) may be sprayed onto the pellets. For example, the EVOH resin may contain the alkali metal salt and the alkaline earth metal salt and carboxylate may be sprayed onto the pellets. The alkali metal salt may be added to the resin or it may be present in the resin as a consequence of the processing conditions following the saponification or transesterification of the ethylene vinyl acetate precursor. In some cases, it may be advantageous to coat the pellets with an alkaline earth metal carboxylate such as calcium stearate. Any applied coating may be dried during the normal final drying step for the resin pellets.

Coating the EVOH pellets coming out of the extruder with alkaline earth metal carboxylates provides pellets with the alkaline earth metal carboxylate on the outside of the pellet. Coating the EVOH pellets coming out of the polymerizer with alkaline earth metal carboxylates, and then re-extruding those pellets is a way for preparing pellets in which the alkaline earth metal carboxylate is incorporated on the inside of the pellets along with alkali metal salts such as sodium acetate. In either case, the pellets can be re-extruded and processed into finished articles in which the modifier combination described herein provides the desired combination of viscosity behavior and adhesion to the EVOH.

EVOH resins that contain unacceptably high gel content may be blended with alkali metal salt, alkaline earth metal salt and carboxylate in an EVOH copolymer composition to provide a final modified EVOH composition with less gel content than that which would be expected if the reduction in gel content resulted simply from dilution of the high gel content EVOH with low gel content concentrate. The desired gel content may be less than about 2000, less than 1000, or less than 250 gels per 50 square feet of a 1.5-2.5 mil thick film. The desired gel counts for those greater than 800 µm may be less than 20, less than 15, less than 10, or less than 5 gels per 50 ft².

If desired, the EVOH composition may be blended with different types of EVOHs each having a different degree of polymerization, different ethylene content and/or a different degree of saponification. Also if desired, a suitable amount of various plasticizers, antioxidants, stabilizers, surfactants, colorants, UV absorbents, slip agents, antistatic agents, drying agents, crosslinking agents, metal salts, fillers, reinforcing agents such as various fibers, etc. may be added to the resin composition.

If desired, suitable amount of any other thermoplastic resin may be added to the resin composition. Other thermoplastic resins that may be added to the composition include, for example, various types of polyolefins (e.g., polyethylene, polypropylene, poly-1-butene, poly-4-methyl-1-pentene, ethylene-propylene copolymers, copolymers of ethylene with α-olefins having at least 4 carbon atoms, polyolefin-maleic anhydride copolymers, ethylene-vinyl ester copolymers, ethylene-acrylate copolymers, and also modified polyolefins prepared by graft-modifying such polymers and copolymers with unsaturated carboxylic acids or their derivatives, etc.), various types of nylons (e.g., nylon-6, nylon-6,6, nylon-6/6,6 copolymers, etc.), and also polyvinyl chlorides, polyvinylidene chlorides, polyesters, polystyrenes, polyacrylonitriles, polyurethanes, polyacetals, modified polyvinyl alcohol resins, etc.

The composition may comprise an antioxidant such as a hindered phenolic antioxidant. The hindered phenolic antioxidant may be one or more of a class of antioxidants characterized by a phenol group with sterically bulky substituents located ortho to the OH functionality. Such antioxidants are well-known and are sold under a variety of trade names. Suitable antioxidants include a hindered phenolic antioxidant selected from the group consisting of 4,4'-thio-bis(6-t-butyl-m-cresol), 1,3,5-trimethyl-2,4,6-tris(3,5-t-butyl-4-hydroxybenzyl)benzene tetrakis(methylene(3,5-di-t-butyl-4-hydroxyhydrocinnamate)methane, octadecyl-3,5-di-t-butyl-4-hydroxyhydrocinnamate, N,N'-hexamethylene-bis(3,5-di-t-butyl-4-hydroxyhydrocinnamamide), N,N'-trimethylene-bis(3,5-di-t-butyl-4-hydroxyhydrocinnamamide), calcium bis(monoethyl(3,5-di-t-butyl-4-hydroxybenzyl)phosphonate), 1,2-bis(3,5-di-t-butyl-4-hydroxyhydrocinnamoyl)hydrazine, hexamethylenebis(3,5-di-t-butyl-4-hydroxyhydrocinnamate), and combinations of two or more thereof.

The EVOH composition may be formed into various moldings such as films, sheets, containers, pipes, fibers, etc. The moldings may be recycled by grinding and re-molding them. The films, sheets and fibers of the composition may be uniaxially or biaxially stretched. The composition may be processed into these articles by means of extrusion, inflation extrusion, blow molding, melt spinning, injection molding, etc. The temperature at which the resin composition to be molded is melted varies, depending on the melting point of EVOH in the composition, but preferably falls between 150 and 270°C or so.

The EVOH composition may be molded into monolayer moldings of the composition alone or formed into multilayer structures comprising at least one layer of the composition in which the layer of the composition may be in any form of film, sheet or the like. The multilayer structure may comprise a layer of the EVOH composition, a layer of a thermoplastic resin other than the EVOH composition and an adhesive layer therebetween.

The layer constitution of the multilayer structures includes, for example, E/Adh/T, T/Adh/E/Adh/T, etc., in which E indicates the EVOH composition, Adh indicates an adhesive resin, and T indicates a thermoplastic resin. However, these are not limitative. In the multilayer structures, each layer may be single-layered, or, as the case may be, multilayered.

Any method of producing the multilayer structures as above may be used. Examples include a method of melt-extruding a thermoplastic resin onto a molding (e.g., film, sheet, etc.) of the EVOH composition; a method of co-extruding the EVOH composition along with any other thermoplastic resin, etc.; a method of co-injecting the EVOH composition along with any other thermoplastic resin; a method of laminating films or sheets of a molding of the EVOH composition and any other substrate via a known adhesive of, for example, organotitanium compounds, isocyanate compounds, polyester compounds and the like, therebetween. Of those, preferred is the method of co-extruding the EVOH composition along with any other thermoplastic resin.

The thermoplastic resin that may be laminated or coextruded with the EVOH composition includes, for example, homopolymers or copolymers of olefins such as linear low-density polyethylenes, low-density polyethylenes, middle-density polyethylenes, high-density polyethylenes, ethylene-vinyl acetate copolymers, ethylene-alkyl acrylate copolymers, ethylene-propylene copolymers, polypropylenes, propylene-α-olefin copolymers (in which the α-olefin has from 4 to 20 carbon atoms), polybutenes, polypentenes, etc.; polyesters such as polyethylene terephthalates, etc.; polyester elastomers; polyamide resins such as nylon-6, nylon-6,6, etc.; as well as polystyrenes, polyvinyl chlorides, polyvinylidene chlorides, acrylic resins, vinyl ester resins, polyurethane elastomers, polycarbonate, chloropolyethylenes, chloropolypropylenes, etc. Of those, preferred are polypropylenes, polyethylenes, ethylene-propylene copolymers, ethylene-vinyl acetate copolymers, polyamides, polystyrenes, and polyesters.

The multilayer structure may optionally comprise an adhesive or "tie" layer to facilitate adherence of the EVOH composition to another thermoplastic resin. For example, the adhesive resin preferably comprises a carboxylic acid-modified polyolefin. The carboxylic acid-modified polyolefin may be prepared by chemically bonding an ethylenic unsaturated carboxylic acid or its anhydride to an olefinic polymer, for example, through addition reaction or grafting reaction. The olefinic polymer includes, for example, polyolefins such as polyethylenes (produced in low-pressure, middle-pressure or high-pressure process), linear low-density polyethylenes, polypropylenes, polybutenes, etc.; copolymers of olefins with comonomers capable of copolymerizing with olefins (e.g., vinyl esters, unsaturated carboxylates, etc.), such as ethylene-vinyl acetate copolymers, ethylene-ethyl acrylate copolymers, etc. Of those, preferred are linear low-density polyethylenes, ethylene-vinyl acetate copolymers (having a vinyl acetate content of from 5 to 55% by weight), and ethylene-ethyl acrylate copolymers (having an ethyl acrylate content of from 8 to 35% by weight); and more preferred are linear-low density polyethylenes and ethylene-vinyl acetate copolymers. The ethylenic unsaturated carboxylic acid and its anhydride include, for example, ethylenic unsaturated monocarboxylic acids and their esters, ethylenic unsaturated dicarboxylic acids and their mono- or di-esters and anhydrides. Of those, preferred are ethylenic unsaturated dicarboxylic acid anhydrides, such as maleic acid, fumaric acid, itaconic acid, maleic anhydride, itaconic anhydride, monomethyl maleate, monoethyl maleate, diethyl maleate, monomethyl fumarate, etc. Most preferred are maleic anhydride, monomethyl maleate and monoethyl maleate-modified polyolefins. Such polymers may be obtained commercially under the BYNEL tradename from E. I. du Pont de Nemours and Company (DuPont).

The amount of the ethylenic unsaturated carboxylic acid or its anhydride to be added to or grafted on the olefinic polymer (that is, the degree of modification of the polymer) may fall between 0.0001 and 15% by weight of the olefinic polymer, or 0.001 and 10% by weight. Addition reaction or grafting reaction of the ethylenic unsaturated carboxylic acid or its anhydride to the olefinic polymer may be effected, for example, through radical polymerization in a solvent (e.g., xylene, etc.) in the presence of a catalyst (e.g., peroxide, etc.).

Alternatively, the adhesive layer comprises a composition comprising a copolymer of ethylene and ethylenic unsaturated dicarboxylic acid anhydrides, such as maleic acid, fumaric acid, itaconic acid, maleic anhydride, itaconic anhydride, monomethyl maleate, monoethyl maleate, diethyl maleate, monomethyl fumarate, etc. obtained by a process of high-pressure free radical polymerization. They are "direct" copolymers, that is, copolymers polymerized by adding all monomers simultaneously. A high-pressure process suitable for preparing such copolymers is described, for example, in US4351931. This process provides random copolymers having copolymerized units of monomers that react with each other to form the polymer chain. The units are thus incorporated into the polymer backbone or chain. These direct copolymers are distinct from graft copolymers described above, wherein a monomer is grafted onto an existing polymer to form a polymer chain having pendant groups.

The melt flow rate (MFR) of the carboxylic acid-modified polyolefin, when measured at 190°C., preferably falls between 0.2 and 30 g/10 min, more preferably between 0.5 and 10 g/10 min. The adhesive resins may be used either singly to be a single layer or as combined to be two or more layers.

For co-extruding the EVOH composition along with a thermoplastic resin, for example, any of a multi-manifold flow-combining T-die process, a feed block flow-combining T-die process, or an inflation process may be suitable.

An aspect of interlayer adhesion in a multilayer structure is the "green adhesion," which is that adhesion developed within the first hour or so after that article is extruded. Such adhesion is used by the converter to judge the on-going success of the extrusion campaign. For the sake of simplicity "adhesion" is used for "green adhesion". Adhesion between the EVOH composition and the adhesive layer is desirably from about 600 g/in to about 1500 g/in or 800 to about 1200 g/in. The composition optionally has adhesion range (for the green adhesion and the thicknesses of (thicker structures have greater adhesion) of greater than 300 g/in, greater than 500 g/in, or greater than 800 g/in.

The coextruded multilayer structures may be fabricated into various moldings (e. g., films, sheets, tubes, bottles, etc.), which include, for example, the following: (1) Multilayer, co-stretched sheets or films, which are produced by uniaxially or biaxially stretching multilayer structures (e.g., sheets, films, etc.), or biaxially stretching them, and thereafter thermally fixing them; (2) Multilayer rolled sheets or films, which are produced by rolling multilayer structures (e.g., sheets, films, etc.); (3) Multilayer tray or cup containers, which are produced through vacuum forming, pressure forming, vacuum-pressure forming or isothermal forming of multilayer structures (e.g., sheets, films, etc.); (4) Multilayer bottle or cup containers, which are produced through stretch blow molding of multilayer structures (e.g., pipes, etc.).

The method for fabricating the multilayer structures is not limited to the above, and any other known fabricating methods (e.g., blow molding, etc.) could apply to the structures.

### Examples

### Materials Used

ADH-1: a linear low density polyethylene graft-modified with 0.11 wt % of maleic anhydride and MI of 1.1 g/10 min.
EVOH-32-1: EVOH with 32 mole % of ethylene.
EVOH-32-2: EVOH with 32 mole % of ethylene and 210°C Melt Flow of 5.4 dg/m and containing (via the method of Inductively Coupled Plasma-Atomic Emission Spectroscopy (ICP)) 6 ppm calcium and 16 ppm sodium as residuals from the polymerization process.
EVOH-32-3: EVOH with 32 mole % of ethylene and containing 9 ppm calcium and 48 ppm sodium as residuals.
EVOH-38-1: EVOH with 38 mole % of ethylene.
EVOH-38-2: EVOH with 38 mole % of ethylene and 210°C Melt Flow of 4.4 dg/m containing 8 ppm calcium and 19 ppm sodium as residuals.
EVOH-44-1: EVOH with 44 mole % of ethylene.
EVOH-44-2: EVOH with 44 mole % of ethylene and 210°C Melt Flow of about 8 dg/m containing 2 ppm calcium and 14 ppm sodium as residuals.
HDPE: high density polyethylene.
Irganox 1010: antioxidant available from Ciba Specialty Chemicals, Inc. Calcium caprylate - available from Pechiney Ltd.
Calcium stearate - available from Scandinavian Formulas.
Sodium stearate - available from City Chemical.
Sodium acetate.
Borax, fused anhydrous (Na₂B₄O₇).
Disodium phosphate (Na₂HPO₄·H₂O).
Sodium phosphate, monobasic (NaH₂PO₄).

### Materials were mixed in either Haake blenders or extruders.

To assess adhesion of the EVOH compositions, 3-layer laminate blown film structures were prepared by blown film coextrusion with the following structure: HDPE layer/ADH-1layer/EVOH layer. Adhesion between the EVOH layer and the ADH-1 layer was measured within about an hour of production using a T-peal test. The multilayer structures were cut into 1 inch (25.4 mm) wide strips in the machine direction of the film and separated at the weakest interlayer. The separated strips were then placed into the jaws of an Instron, and the peel force to separate the strip at a test speed of 12 inches/minute (0.305 m/minute) measured. The average of ten strips is reported.

Compositions used in the Tables below were assessed as non-modified compositions prior to compounding with additives. Samples of EVOH were melt blended in a 30mm Werner & Pfleider extruder at a rate of about 30 Ib/hr. The melt temperature was between 220°C and 230°C at the die. That melt was extruded (without screen pack) through a single hole die (4.7 mm diameter) into a strand that was water cooled and pelletized. The pellets were dried overnight at 100°C in vacuum and nitrogen. The pellets were tested in a capillary rheometer at 250°C. They were held for a total of about 90 minutes in the closed rheometer and readings were taken periodically at about 72 inverse seconds shear rate. The viscosity readings at about 60 minutes were divided by the readings at 30 minutes to give a ratio. The metallic elements in the form of cations present in the unmodified EVOH as residuals from the polymerization process. Those elements were measured using ICP and viscosity ratios and adhesion to ADH-1 and are summarized in Table 1 (V means the ratio was a viscosity ratio and T means the ratio was a torque ratio).

In the Tables below, viscosity ratio was the ratio of the torque or viscosity measured after 60 minutes of holding at 250°C to the torque or viscosity measured after about 30 minutes. The torque values were generated in a Haake Rheomix 600 batch unit using roller blends running at 50 rpm. The unit was filled with 55 grams of resin and the lid closed. Nitrogen blanketing was used around the top to minimize air. The viscosity numbers were generated using a capillary rheometer wherein about 20 grams was held in the capillary and the plunger installed. The resin was held for 60 minutes. Periodically viscosity readings were taken at 72 inverse seconds.

**Table 1**

| EVOH | 32-1 | 32-2 | 32-3 | 38-1 | 38-2 | 44-1 | 44-2 |
|---|---|---|---|---|---|---|---|
| Na ppm | 50 | 16 | 48 | 17 | 19 | 14 | 13 |
| K ppm | 42 | 9 | 41 | 10 | 7 | 17 | 14 |
| P ppm | 18 | 5 | 18 | 5 | 2 | 8 | 7 |
| Ca ppm | 10 | 6 | 9 | 10 | 8 | 2 | 2 |
| Ratio Method | T | V | T | | V | V | V |
| Viscosity ratio | 1.1 | 1.38 | 1.7 | -- | 1.15 | 1.06 | 0.85 |
| Adhesion(g/in) | 600 | 79 | | -- | 560 | 393 | 155 |

All Examples in Table 2 contained 2.27 kg of EVOH-32-1 and 4.54 g of Irganox 1010. All other components were as summarized in Table 1, with amounts in grams. Non-modified EVOH-32-1 had 50 ppm Na and 7 ppm Ca residuals and exhibited green peal adhesion of 600 g/in. Samples 85-2 and 85-5 compared with respective samples 85-1 and 85-4 show viscosity ratios that demonstrate the effect of higher acidity salts (proton donating salts) on counteracting the desired viscosity drop effect.

Samples 85-2 and 85-5 compared with respective samples 85-1 and 85-4 show viscosity ratios that demonstrated the effect of higher acidity salts (proton donating salts) on counteracting the desired viscosity drop effect.

The compositions were blended in a 30 mm W&P extruder using a screw having all conveying elements and about 5% kneading block elements. The screw was run at 200 rpm at a set point of 175°C. Pellets were water cooled.

**Table 2**

| Examples | 85-1 | 85-2 | 85-3 | 85-4 | 85-5 | 85-6 | 85-7 | 85-8 | 85-9 | 85-10 | 85-11 | 85-12 |
|---|---|---|---|---|---|---|---|---|---|---|---|---|
| Additive (g) | | | | | | | | | | | | |
| Na₂B₄O₇ | | | | 0.83 | 0.83 | 0.67 | 0.67 | | | | | |
| NaH₂PO₄ | | 0.40 | | | 0.20 | | 0.20 | | | | | |
| Na₂HPO₄·H₂O | 0.57 | | 0.57 | 0.27 | | | | 0.57 | | | | |
| Na Acetate | | | 0.33 | | | 0.60 | 0.60 | | | | | |
| Ca Caprylate | 0.45 | 0.45 | | 0.45 | 0.45 | | | | | | | |
| Ca Stearate | 2.47 | 2.47 | 2.47 | 2.47 | 2.47 | 1.50 | 1.50 | 2.47 | | | | |
| K Acetate | | | | | | | | 0.40 | | | | |
| Na Stearate | | | | | | | | | 3.50 | | 1.75 | 2.2 |
| K L-tartrate | | | | | | | | | | 2.50 | | |

| Calculated | | | | | | | | | | | | |
|---|---|---|---|---|---|---|---|---|---|---|---|---|
| ppm Ca Caprylate | 200 | 200 | | 200 | 200 | | | | | | | |
| ppm Ca Stearate | 1090 | 1090 | 1090 | 1090 | 1090 | 661 | 661 | 1090 | | | | |
| µEq/g (5 + added)¹ | 12 | 11 | 13 | 15 | 14 | 13 | 14 | 13 | 10 | 5 | 7 | 8 |
| µEq/g² | 5 | 5 | 5 | 5 | 5 | 5 | 5 | 5 | 5 | 5 | 2 | 3 |
| ppm (106 + added) ¹ | 265 | 236 | 282 | 316 | 303 | 291 | 308 | 311 | 218 | 106 | 162 | 176 |

| Measured by ICP | | | | | | | | | | | | |
|---|---|---|---|---|---|---|---|---|---|---|---|---|
| ppm P | 67 | 69 | 67 | 41 | 44 | 18 | 44 | 67 | 18 | 18 | 18 | 18 |
| ppm B | 0 | 0 | 0 | 80 | 80 | 64 | 64 | 0 | 0 | 0 | 0 | 0 |
| ppm K | 33 | 33 | 35 | 34 | 35 | 36 | 36 | 57 | 56 | 215 | 129 | 62 |
| ppm Na | 100 | 60 | 105 | 114 | 171 | 129 | 210 | 83 | 137 | 134 | 115 | 125 |
| ppm Ca | 81 | 82 | 65 | 65 | 80 | 45 | 44 | 62 | 18 | 16 | 11 | 9 |
| µEq/g³ | 6 | 4 | 8 | 8 | 7 | 9 | 10 | 8 | 8 | 8 | 5 | 6 |
| µEq/g⁴ | 7 | 7 | 6 | 7 | 7 | 4 | 4 | 6 | 2 | 2 | 2 | 2 |
| µEq/g⁵ | 12 | 11 | 13 | 15 | 14 | 13 | 14 | 13 | 10 | 10 | 7 | 8 |
| MI | | 2.5 | | | | | | | | | | |
| Torque %⁶ | 54 | 55 | 59 | 54 | 53 | 53 | 53 | 54 | 54 | 53 | 54 | 54 |
| Die Pressure psi⁷ | 260 | 265 | 265 | 272 | 268 | 272 | 265 | 270 | 278 | 252 | 265 | 260 |
| Pressure psi⁸ | 2140 | 1925 | 2075 | 2050 | 2180 | 2090 | 2030 | 2245 | 2250 | 1830 | 1989 | 1780 |
| Viscosity ratio | 0.85 | 1.0 | 1.08 | 0.86 | 0.90 | 1.01 | 0.91 | 0.83 | 1.01 | 1.09 | 1.09 | 1.15 |
| Adhesion (g/in) | 650 | 650 | 1070 | 840 | 830 | 480 | 830 | 970 | 1470 | 1370 | 1050 | 1210 |
| Std. dev. | 250 | 195 | 179 | 166 | 160 | 220 | 180 | 160 | 140 | 170 | 170 | 190 |
| Cations; ²Carboxylate anions; ³Group I cations; ⁴Group II cations ; ⁵All cations; ⁶Pelletization Torque ⁷Pelletization ie Pressure ; ⁸Blown film Pressure. | | | | | | | | | | | | |

Samples were prepared using 3.18 kg of EVOH and 6.36 g of Iraganox 1010, as summarized in Tables 3-5. The amounts of other components are listed in grams, except where ppm (by weight) is shown.

The data in Table 3 show that with similar equivalents of added carboxylates the alkaline earth carboxylates are more effective than the alkali carboxylates in causing the desired viscosity drop behavior. That is, the melt blended additive calcium caprylate is a more effective ingredient by itself than are either the additive sodium acetate or sodium acetate residuals. Samples 52-13, 52-14, and 52-15 demonstrate further the greater potential of calcium caprylate over sodium acetate and also that small amounts of calcium carboxylate added to sodium carboxylate increase the effectiveness of the sodium carboxylate in causing the desired viscosity drop. Viscosity ratio was measured as (60min/28min).

**Table 3**

| Example | 52-1 | 52-2 | 52-3 | 52-7 | 52-8 | 52-9 | 52-13 | 52-14 | 52-15 |
|---|---|---|---|---|---|---|---|---|---|
| EVOH | 44-2 | 44-2 | 44-2 | 38-2 | 38-2 | 38-2 | 32-2 | 32-2 | 32-2 |
| Sodium Acetate | | 0.19 | | | 0.15 | | | 0.15 | |
| Calcium caprylate | | | 0.40 | | | 0.31 | | | 0.32 |
| Sodium stearate | 5.56 | 5.56 | 5.56 | 4.30 | 4.30 | 4.30 | 5.56 g | 5.56 | 5.56 |
| ICP VIRGIN EVOH | | | | | | | | | |
| Na ppm | 13 | 13 | 13 | 19 | 19 | 19 | 16 | 16 | 16 |
| K ppm | 14 | 14 | 14 | 7 | 7 | 7 | 9 | 9 | 9 |
| P ppm | 7 | 7 | 7 | 2 | 2 | 2 | 5 | 5 | 5 |
| Ca ppm | 2 | 2 | 2 | 8 | 8 | 8 | 6 | 6 | 6 |

| Residual+added (theory) | | | | | | | | | |
|---|---|---|---|---|---|---|---|---|---|
| Na (ppm) | 140 | 157 | 140 | 117 | 130 | 117 | 143 | 156 | 143 |
| K (ppm) | 14 | 14 | 14 | 7 | 7 | 7 | 9 | 9 | 9 |
| Ca (ppm) | 2 | 2 | 16.6 | 8 | 8 | 19 | 6 | 6 | 18 |
| Na eq/Ca eq | 61 | 68 | 7 | 13 | 14 | 5 | 21 | 23 | 7 |

| ICP finished blend: | | | | | | | | | |
|---|---|---|---|---|---|---|---|---|---|
| Na (ppm) | 101 | 135 | 117 | 116 | 121 | 109 | 101 | 135 | 113 |
| Ca (ppm) | 13 | 7 | 24.0 | 10 | 9 | 17 | 6 | 22 | 19 |
| K (ppm) | 28 | 27 | 28 | 8 | 12 | 11 | 3 | 10 | 4 |
| Mg (ppm) | 0.1 | 0.1 | 0.1 | 0.1 | 0.1 | 0.1 | 0.1 | 1 | 1 |

| Calculations: | | | | | | | | | |
|---|---|---|---|---|---|---|---|---|---|
| All carboxylate (ueq/g) | 5.7 | 6.4 | 6.4 | 4.4 | 5.0 | 5.0 | 5.7 | 6.3 | 6.3 |
| Ca carboxylate | 0.0 | 0.0 | 0.7 | 0.0 | 0.0 | 0.6 | 0.0 | 0.0 | 0.6 |
| Na carboxylate | 5.7 | 6.4 | 5.7 | 4.4 | 5.0 | 4.4 | 5.7 | 6.3 | 5.7 |
| Viscosity ratio | 1.07 | 1.05 | 0.98 | 0.99 | 0.98 | 0.94 | 1.08 | 1.00 | 0.97 |
| Adhesion (gm/in) | 723 | 817 | 834 | 812 | 861 | 1014 | 1170 | 1030 | 940 |

Adhesion was improved to above 800 g/in when the EVOH contains more than about 100 ppm of total sodium (110 ppm for 32%, 130 ppm for 38% and 150 ppm for 44%).

Table 4 shows examples with very good adhesion (greater than 800 g/in, but little or no viscosity drop.

**Table 4**

| Example | 52-4 | 52-5 | 52-6 | 52-10 | 52-11 | 52-12 | 52-16 | 52-17 | 52-18 |
|---|---|---|---|---|---|---|---|---|---|
| EVOH | 44-1 | 44-1 | 44-1 | 38-1 | 38-1 | 38-1 | 32-1 | 32-1 | 32-1 |
| Na₂HPO₄·H₂O | | 0.23 | 0.34 | 0 | 0.72 | 0.81 | 0 | 0.24 | 0.32 |
| Na Acetate | 1.62 | 1.62 | 1.52 | 1.14 | 1.14 | 1.06 | 1.62 | 1.62 | 1.55 |
| Ca Caprylate | 0 | 0 | 0.20 | 0 | 0 | 0.16 | 0 | 0 | 0.16 |
| Na Stearate | 0 | 0 | 0 | 0 | 0 | 0 | 0 | 0 | 0 |

| Calculated | | | | | | | | | |
|---|---|---|---|---|---|---|---|---|---|
| ppm Ca Caprylate | 0 | 0 | 63 | 0 | 0 | 50 | 0 | 0 | 50 |
| ppm Na Stearate | 0 | 0 | 0 | 0 | 0 | 0 | 0 | 0 | 0 |
| ppm Na₂HPO₄·H₂O | | 72 | 107 | 0 | 227 | 255 | 0 | 76 | 101 |
| ppm Na acetate | 510 | 510 | 478 | 359 | 359 | 334 | 510 | 510 | 488 |

| Measured by ICP | | | | | | | | | |
|---|---|---|---|---|---|---|---|---|---|
| ppm K | 24 | 27 | 29 | 20 | 28 | 29 | 18 | 19 | 14 |
| ppm P | -- | -- | -- | | | | | | |
| ppm Na | 119 | 163 | 134 | 116 | 163 | 149 | 158 | 175 | 158 |
| ppm Ca | 7 | 61 | 9 | 7 | 12 | 14 | 7 | 15 | 55 |
| Viscosity ratio | 1.04 | 0.94 | 0.95 | 1.03 | 1.03 | 1.04 | 1.12 | 1.10 | 1.08 |
| Adhesion (g/in) | 812 | 848 | 896 | 933 | 1077 | 982 | 1205 | 942 | 1011 |

The data in Table 5 shows that compositions with Ca carboxylates only (Examples 95-11, 95-13, 95-14) have high viscosity drop and reduced adhesion. 95-15 and 95-16 show a combination of good adhesion and viscosity drop for compositions comprising both Na and Ca ion. Example 95-16 is a composition containing only sodium acetate.

**Table 5**

| Example | 95-11 | 95-12 | 95-13 | 95-14 | 95-15 | 95-16 | 95-17 |
|---|---|---|---|---|---|---|---|
| EVOH | 32-1 | 32-1 | 32-1 | 32-1 | 32-1 | 32-1 | 32-1 |
| Na₂HPO₄·H₂O | 0 | 1.05 | 0 | 0 | 0 | 0 | 1.05 |
| Na Acetate | 0 | 0 | 0 | 0 | 0.41 | 0.70 | 0 |
| Ca Caprylate | 2.6 | 2.6 | 1.3 | 0.63 | 0 | 0 | 0.63 |
| Ca Stearate | 3.46 | 3.46 | 3.46 | 3.46 | 2.03 | 0 | 3.46 |
| Calculated | | | | | | | |
| ppm Ca Caprylate | 818 | 818 | 409 | 198 | 0 | 0 | 198 |
| ppm Ca Stearate | 1088 | 1088 | 1088 | 1088 | 639 | 0 | 1088 |
| ppm Na₂HPO₄·H₂O | | 330 | | | | | 330 |
| ppm Na acetate | | | | | 129 | 220 | |
| Measured by ICP | | | | | | | |
| ppm Na | 68 | 98 | 61 | 59 | 88 | 95 | 104 |
| ppm Ca | 124 | 117 | 92 | 82 | 48 | 15 | 71 |
| Viscosity ratio | 0.10 | 0.08 | -- | -- | 0.9 | 1.04 | 0.76 |
| Adhesion (g/in) | 700 | 570 | 350 | 400 | 650 | 905 | 615 |

In another experiment 55 grams of non-modified EVOH-32-3 was melt blended at 250°C in a Haake Rheomix 600 twin-screw batch mixer using roller blades. The rpm was 50 and the torque was monitored for 60 minutes. The torque is proportional to melt viscosity. The ratio of torque at 60 minutes divided by the torque at 30 minutes was 1.7 which means the viscosity was increasing with time. In another experiment EVOH-32-3 was melt compounded with 0.126 weight % calcium caprylate, 0.11 weight % calcium stearate, and 0.2 weight % Irganox 1010 using a 30 mm bilobal twin screw extruder manufactured by Werner & Pfleiderer. The screw was designed with all forward conveying elements with 5% of its length being kneading blocks. The melt temperature was 215°C, there was no screen pack, one die of 4.7 mm diameter, and the melt was strand pelletized at 30 Ib/hr. The pellets were dried overnight in vacuum at 100°C. The viscosity stability of the pellets was analyzed on a Haake Rheomix 600 (55 grams capacity) using roller blades running at 50 rpm, 250°C, for 60 minutes. The ratio of torque at 60 minutes to that at 30 minutes was 0.4. This ratio means the melt viscosity was decreasing with time. The dried pellets were then fed into a Prism A PM-44 16 mm bilobal twin screw extruder with the barrels set to 220°C; there was no screen pack. The resin was strand pelletized using dry ice (solid carbon dioxide) for cooling the strand without introducing moisture. The strand was pelletized and the pellets re-extruded. Samples of pellets were retained from 4, 8 and 12 passes through the extruder.

The pellets were extruded into blown film using a 1.9-cm single (25:1 L:D) screw extruder sold by C.W. Brabender Instruments, Inc. (South Hackensack, NJ) to feed a circular die that generated a blown film of 3.5 mil (±1.5 mil) thickness. The gel in that film was estimated from photographs of the film when light was shined tangentially to the film. The gel appears as white spots. A count was manually made of gel particles larger than about 0.1 mm diameter within an area of 4 square-cm. The results are summarized in Table 6. They show a remarkable and surprising reduction of the gel that was present in the original sample (EVOH-32-3 with and without additives ("not re-extruded").

**Table 6**

| EVOH | | Gel Count | | | | |
|---|---|---|---|---|---|---|
| | Additives | Not re-extruded | 4 Re-extrusions | 8 Re-extrusions | 12 Re-extrusions | Haake Torque ratios |
| 32-3 | none | 10 | 3 | 3 | 2 | 1.7 |
| 32-3 | 0.43% | 1 | 0 | 0 | 1 | 0.4 |

The increased rate of gel reduction was accomplished by blending the EVOH with the additives and subjecting the melt to mild mixing.

As a comparison commercial 32% EVOH supplied by Kuraray under the designation F101 was also repeatedly re-extruded and then extruded into blown film. The gel count was constant at about 3 gels per 4 cm² for the non-reextruded resin and for the 4, 8, and 12-pass versions.

In another experiment, pellets of EVOH-32-3 were melt compounded with 0.126% calcium caprylate, 0.11 % calcium stearate, and 0.2% Irganox 1010 as described above and were measured for melt stability in a capillary rheometer by the method used above except at 230°C instead of at 250°C. The ratio for viscosity at 60 minutes divided by that at 30 minutes was 0.99. The rheometer test was run on a fresh sample at 210°C and the viscosity ratio was 1.15. This result means that the carboxylate additives did not cleave the EVOH molecule at 210°C at rates comparable to those at to 230°C or especially at 250°C. This result means that concentrates of the additive components in an EVOH carrier can be made at low temperatures without a concern that the carrier itself will be degraded.

In another example, 50 grams of EVOH-32-2 are blended in a Haake batch blender at a temperature ranging between 180°C and 190°C for 5 minutes with 0.2 weight % calcium caprylate, 0.4 weight % sodium acetate, and 2 weight % Irganox 1010. Ten parts of the resulting composition with 90 parts of EVOH-32-2 are fed into the single screw extruder described above feeding a blown film die. The barrels were set to 250°C. The process is run until a steady state is reached and the unit is then shut down for 3 hours. The process is restarted. The gel content of the film leaving the die is monitored for two residence times. The film leaving the die after one residence time represents resin held at the feed end of the single screw extruder. The gel in that film is monitored. It is expected that the EVOH-32-2 without additive has a very high gel count for the one-residence time film and the sample composed of EVOH-32-2 with 10% of the Haake-produced "concentrate" has a low gel count and viscosity reduction.

In another experiment EVOH of 32% ethylene content and 1 µEq/g residual sodium was melt blended with sodium acetate to generate a pellet that by ICP measurement contained 240 ppm sodium (10.4 uEq/g sodium). The blending was accomplished [E107558-137] on a Prism twin screw extruder with melt temperatures of about 200°C. The pellets generated were dried at 100°C overnight. The pellets were tested by holding them in a capillary rheometer at 250°C for 60 minutes. Intermediate tests of the viscosity at 72 inverse seconds gave a ratio of viscosity at 60 minutes divided by the viscosity at 30 minutes of 1.1. The same EVOH resin without added sodium acetate had a ratio of 1.8. This result shows that added sodium acetate can give a viscosity drop effect.

EVOH of 32% ethylene comonomer content was made in a way to retain sodium acetate. By ICP measurement, the total sodium content of the resin was 190 ppm (8.3 µEq/g) [E109032-98]. Samples of this resin were held in a capillary rheometer at 250°C for 60 minutes. The viscosity ratio at 60 minutes divided by that at 30 minutes was 1.38. Another EVOH sample made with 89 ppm sodium (3.9 µEq/g) was tested and had a ratio of 1.53. This result shows that the use of residual sodium acetate can be used to cause a viscosity drop effect.

In an experiment to demonstrate the carboxylate source can be aliphatic or aromatic an EVOH of 32% ethylene and having 13 ppm residual sodium and 3 ppm residual calcium was melt blended in a Haake blender at 250°C for 60 minutes with various additives. The torque was monitored. The results below show that either aromatic or aliphatic carboxylates are effective in causing viscosity drop.

**Table 7**

| | uEq/g | uEq/g | uEq/g | uEq/g |
|---|---|---|---|---|
| Calcium caprylate | 2.7 | 2.7 | 2.7 | 0 |
| Potassium benzoate | 6.4 | 0 | 0 | 0 |
| Sodium fumarate | 0 | 6.4 | 0 | 0 |
| Potassium stearate | 0 | 0 | 6.5 | 0 |
| Total | 9.1 | 9.1 | 9.2 | 0 |
| Torque Ratio | 0.60 | 0.71 | 0.41 | not measured |

EVOH-32-2, EVOH-38-2, and EVOH-44-2 were extruded using a 1.5-inch single screw extruder with set points at 210°C through a screw pack of 20/60/20 (Mesh) and into film 2±0.5 mil thick running at 30 feet/minute speeds. The film was monitored by an automatic gel count (modular surface inspection) unit "Film Test FSA100" using an OCS FS-5 camera, all supplied by Optical Control Systems GmbH (Witten, Germany). The gel present was recorded as the number of gel particles per 50 square feet of film. The same EVOH resins were blended with sodium acetate (amounts shown in Table 8), 200 ppm of calcium caprylate and 2000 ppm of Irganox 1010 using a 1750 mm long, 40 mm bilobal twin screw extruder manufactured by Werner & Pfleiderer. The screw was composed of all forward conveying elements with about a 90-mm length of kneading blocks. No screen pack was used. The setpoints for the barrels were at about 190°C and held the resin melt to about 205 to 210°C. The resin was extruded through a strand die, pelletized, and dried to about 0.3% moisture content. This resin was processed in the same manner as above into film with automatic gel counting measurements. The results show the chemically modified EVOH resins to have a surprising reduction of gel from that which was previously present in the resin. The results are summarized in Table 8.

**Table 8**

| | EVOH base resin | NaOAC added(ppm) | Gel Count | | | | |
|---|---|---|---|---|---|---|---|
| Example | | | 200 µm | 200-400 µm | 400-800 µm | >800 µm | total |
| 44-9 | EVOH-32-2 | 0 | 84164 | 19690 | 1802 | 172 | 105828 |
| 44-9 | EVOH-32-2 | 510 | 9567 | 1030 | 98 | 2 | 10697 |
| 44-9 | EVOH-32-2 | 510 | 9934 | 1109 | 79 | 8 | 11130 |
| 44-4 | EVOH-38-2 | 0 | 50567 | 7440 | 520 | 26 | 58553 |
| 44-4 | EVOH-38-2 | 0 | 48597 | 6889 | 518 | 31 | 56015 |
| 44-4 | EVOH-38-2 | 580 | 3572 | 769 | 102 | 7 | 4450 |
| 44-4 | EVOH-38-2 | 580 | 3668 | 780 | 91 | 6 | 4545 |
| 44-1 | EVOH-44-2 | 0 | 3325 | 754 | 142 | 9 | 4230 |
| 44-1 | EVOH-44-2 | 0 | 2908 | 674 | 155 | 13 | 3750 |
| 44-1 | EVOH-44-2 | 580 | 3008 | 814 | 94 | 6 | 3922 |
| 44-1 | EVOH-44-2 | 580 | 2616 | 774 | 109 | 3 | 3502 |

Melt viscosity ratio and adhesion were measured ("Good" means the layers could not be separated) (adhesion may be more than about 900 g/in) and summarized in Table 9.

**Table 9**

| Example | Viscosity ratio (60 minutes/30 minutes) | Adhesion (g/in) |
|---|---|---|
| 44-9 | 0.71 | good |
| 44-4 | 0.87 | good |
| 44-1 | 1.04 | good |
| EVOH-32-1 | 1.06 | 79 |
| EVOH-38-2 | 1.14 | 560 |
| EVOH-44-2 | 1.07 | 393 |

Similar films were prepared from EVOH-32 and EVOH-38 which were unmodified or modified with addition of a combination of calcium caprylate and sodium acetate. The pellets were prepared using the 30 mm extruder using conditions described above. Unmodified EVOH -32-3 and EVOH-38-2 pellets were processed through the extruder without additive and saved. A new set of EVOH-32-3 and EVOH-38-2 pellets were processed through the extruder with the additives of 200 pm calcium caprylate, 580 ppm sodium acetate, and 2000 ppm Irganox 1010. The 4 samples of pellets were dried and then processed into film and laser counted via the methods already described. The results (Table 10) show that the presence of the additive combination is responsible for the reduction of the gel population that was originally present in the unmodified EVOH pellets.

**Table 10**

| | Gel Count | | | | |
|---|---|---|---|---|---|
| Example | 200 µm | 200-400 µm | 400-800 µm | >800 µm | Total |
| Run 1 | 14031 | 2384 | 176 | 8 | 16599 |
| Run 2 | 13694 | 2129 | 174 | 11 | 16008 |
| Run 1 | 3452 | 696 | 110 | 11 | 4269 |
| Run 2 | 2991 | 510 | 91 | 10 | 3602 |
| Run 1 | 6279 | 948 | 221 | 16 | 7464 |
| Run 2 | 6315 | 887 | 182 | 7 | 7391 |
| Run 1 | 3603 | 761 | 146 | 5 | 4515 |
| Run 2 | 3101 | 742 | 132 | 13 | 3988 |

In another experiment, a concentrate of additive was made by blending 55 g of EVOH-32-2 with 2000 ppm calcium caprylate, 20000 ppm Irganox 1010 and 5800 ppm sodium aceate at 225°C, 125 rpm for 5 minutes. The torque did not drop when the temperature remained constant at 225°C. The resulting product was ground into particles about 2 mm in size. The particles were dry blended with EVOH-32-2 at a ratio of 1 parts to 10 parts of the EVOH-32-2. The dry blend was fed into a single screw extruder as described above except the screw was a mixing screw where about 33% of the screw had restrictions to force mixing of the melt. The extrudate was made into a blown film of about 2 mil thickness. The gel content of the unmodified EVOH-32-2 was 10 gels per 4 square cm. the gel content of the modified EVOH-32-2 was 3 gels per 4 square cm.

## Claims

1. A composition comprising or produced from an ethylene vinyl alcohol copolymer and a mixture wherein
the ethylene vinyl alcohol copolymer comprises 20 to 50 %, by weight of the copolymer, of repeat units derived from ethylene;
the mixture comprises at least one alkali metal salt, at least one alkaline earth metal salt, and at least one carboxylate moiety having 3 to 18 carbon atoms;
the alkali metal ion present in the composition is 1 µeq/g to 10 µeq/g, based on micro-equivalents of alkali metal ion per gram (µeq/g) of the composition;
the carboxylate moiety is present in the composition from 0.5 µeq/g to 7 µeq/g, based on micro-equivalents of carboxylate per gram of the composition; and
the composition has reduced gel formation, as compared with the ethylene vinyl alcohol copolymer wherein the gel present is recorded by an automatic gel count unit "Film Test FSA100" as the number of gel particles per 4.5 m² (50 square feet) of a 50.8±12.7 µm (2±0.5 mil) thick film as described in the description.

2. The composition of claim 1 wherein
the alkali metal ion present in the composition is 6.5 µeq/g to 10 µeq/g, 2.5 µeq/g to 6.5 µeq/g, or 1 µeq/g to 2.5 µeq/g, based on micro-equivalents of alkali metal ion per gram (µeq/g) of the composition.

3. The composition of claim 1 or 2 wherein
the ethylene vinyl alcohol copolymer comprises 30 to 44% of repeat units derived from ethylene; and
the alkali metal salt is an alkali metal acetate and the carboxylate moiety is alkaline earth metal carboxylate.

4. The composition of claim 1, 2 or 3 wherein
the ethylene vinyl alcohol comprises 30 to 40% of repeat units derived from ethylene;
the alkaline earth metal carboxylate is calcium caprylate; and
the composition has viscosity ratio of 0.3 to 1.2.

5. The composition of claim 1, 2, 3, or 4 wherein
the alkali metal salt present in the composition is 6.5 µeq/g to 10 µeq/g; and the carboxylate moiety present in the composition is 0.5 µeq/g to 4 µeq/g

6. The composition of claim 1, 2, 3, 4, or 5 wherein the composition
further comprises an antioxidant and a 1.5 to 2.5 mil (37 to 62 pm) thick film made from the composition has gel content of less than 2000 gels per 50 square feet.

7. The composition of claim 6 wherein
the antioxidant is a hindered phenolic antioxidant;
the ratio of the alkali metal salt to the alkaline earth metal salt is from 1 to 20 equivalents;
the ratio of the carboxylate moiety to the alkaline earth metal salt is 0.1 to 15 equivalents; and
the alkaline earth metal ion present in the composition is 0.5 µeq/g to 400 µeq/g, based on micro-equivalents of alkaline earth metal ion per gram of the composition.

8. The composition of claim 1, 2, 3, or 4 wherein
the alkali metal ion present in the composition is 1 µeq/g to 2.5 µeq/g;
the alkaline earth metal ion present in the composition is 0.5 µeq/g to 4 µeq/g, based on micro-equivalents of alkaline earth metal ion per gram of the composition; and
the carboxylate moiety present in the composition is 0.5 µeq/g to 4 µeq/g, based on micro-equivalents of carboxylate per gram of the composition.

9. The composition of claim 1, 2, 3, 4 or 8 wherein the alkaline earth metal ion present in the composition is 2.5 µeq/g to 4 µeq/g, based on micro-equivalents of alkaline earth metal ion per gram of the composition; and the total carboxylate moiety present in the composition is 2.5 µeq/g to 4 µeq/g, based on micro-equivalents of carboxylate per gram of the composition.

10. The composition of claim 1, 2, 3 or 4 wherein
the alkali metal ion present in the composition is 2.5 µeq/g to 6.5 µeq/g;
the alkaline earth metal ion present in the composition is 0.5 µeq/g to 4 µeq/g, preferably 2.5 µeq/g to 4 µeq/g, based on micro-equivalents of alkaline earth metal ion per gram of the composition;
the total carboxylate moiety present in the composition is 0.5 µeq/g to 4 µeq/g; and the carboxylate moiety present in the composition is 2.5 µeq/g to 4 µeq/g.

11. An article comprising or produced from a composition as **characterized in** any one of claims 1 to 10; the article comprises a monolayer structure or multilayer structure; and the article includes film, sheet, tube, bottle, container, pipe, fiber, tray, or cup.

12. The article of claim 11 wherein
the article is the multilayer structure;
the structure comprises a first layer, an adhesive layer, and a second layer;
the first layer comprises the composition;
the second layer comprises a thermoplastic resin other than the composition;
the thermoplastic resin is polyolefin, polyester, polyester elastomer, polyamide, polystyrene, polyvinyl chloride, polyvinylidene chloride, acrylic resin, vinyl ester resin, polyurethane elastomer, polycarbonate, or combinations of two or more thereof; and the polyolefin is linear low-density polyethylene, low-density polyethylene, middle-density polyethylene, highdensity polyethylene, ethylene-vinyl acetate copolymer, ethylene-alkyl acrylate copolymer, ethylene-propylene copolymer, polypropylene, propylene-α-olefin copolymer, polybutene, polypentene, chloropolyethylene, chloropolypropylene, or combinations of two or more thereof; and
the adhesive layer is between the first layer and the second layer; and adhesion between the first layer and the adhesive layer is greater than 300 g/in.

13. A method comprising contacting a non-modified ethylene vinyl alcohol copolymer with a mixture under a condition effective to produce a modified ethylene vinyl alcohol copolymer wherein
the contacting is melt mixing;
the non-modified ethylene vinyl alcohol copolymer comprises 20 to 50 %, by weight of the copolymer, of repeat units derived from ethylene;
the mixture comprises at least one alkali metal salt; at least one alkaline earth metal salt; at least one carboxylate moiety having 3 to 18 carbon atoms;
the modified ethylene vinyl alcohol copolymer has reduced gels compared to the ethylene vinyl alcohol copolymer and has the same characteristic as that recited in any one of claims 1 to 11 wherein the gel present is recorded by an automatic gel count unit "Film Test FSA100" as the number of gel particles per 4.5 m² (50 square feet) of a 50.8±12.7 µm (2±0.5 mil) thick film as described in the description;
the total carboxylate moiety is present in the mixture from 0.5 µeq/g to 10 µeq/g, based on micro-equivalents of carboxylate per gram of the non-modified ethylene vinyl alcohol copolymer;
the ratio of the alkali metal salt to the alkaline earth metal salt is from 1 to 20 equivalents; and
the ratio of the at least one carboxylate moiety to the alkaline earth metal salt is 0.1 to 15 equivalents.

14. The method of claim 13 wherein
the mixture further comprises a second non-modified ethylene vinyl alcohol copolymer, which comprises 20 to 50 %, by weight of the copolymer, of repeat units derived from ethylene; and
the method further comprises contacting the modified vinyl alcohol copolymer with non-modified ethylene vinyl alcohol copolymer, which comprises 20 to 50 %, by weight of the copolymer, of repeat units derived from ethylene.

15. A method for preparing a modified ethylene vinyl alcohol copolymer composition comprising: melt mixing a first composition comprising an ethylene vinyl alcohol copolymer, comprising 20 to 50 %, by weight of the copolymer, of repeat units derived from ethylene, with a mixture comprising at least one alkaline earth metal carboxylate having 3 to 18 carbon atoms; at least one alkali metal salt; and an ethylene vinyl alcohol copolymer comprising 20 to 50 % of repeat units derived from ethylene, by weight of the copolymer; to produce a modified ethylene vinyl alcohol copolymer composition wherein the total carboxylate moieties having 3 to 18 carbon atoms present is 0.5 µeq/g to 10 µeq/g, based on micro-equivalents of carboxylate per gram of the composition; and wherein the modified ethylene vinyl alcohol copolymer composition has reduced gels compared to the first composition wherein the gel present is recorded by an automatic gel count unit "Film Test FSA100" as the number of gel particles per 4.5 m² (50 square feet) of a 50.8±12.7 µm (2±0.5 mil) thick film as described in the description.

## Patentansprüche

1. Zusammensetzung umfassend ein Ethylen-Vinylalkohol-Copolymer und eine Mischung, oder daraus hergestellt, wobei
das Ethylen-Vinylalkohol-Copolymer 20 bis 50 %, auf das Gewicht des Copolymers bezogen, Wiederholungseinheiten umfasst, die von Ethylen abgeleitet sind;
die Mischung mindestens ein Alkalimetallsalz, mindestens ein Erdalkalimetallsalz und mindestens einen Carboxylatanteil umfasst, der 3 bis 18 Kohlenstoffatome aufweist;
das in der Zusammensetzung vorliegende Alkalimetallion 1 µäq/g bis 10 µäq/g, auf Mikroäquivalente Alkalimetallion pro Gramm (µäq/g) der Zusammensetzung bezogen, beträgt;
der Carboxylatanteil in der Zusammensetzung in einer Menge von 0,5 µäq/g bis 7 µäq/g, auf Mikroäquivalente Carboxylat pro Gramm der Zusammensetzung bezogen, vorliegt; und
die Zusammensetzung eine reduzierte Gelbildung im Vergleich mit dem Ethylen-Vinylalkohol-Copolymer aufweist, wobei das vorliegende Gel durch eine automatische "Folientest FSA100"-Gelzähleinheit als die Anzahl von Gelteilchen pro 4,5 m² (50 Quadrat-Fuß) einer 50,8±12,7 µm (2±0,5 mil) dicken Folie, wie in der Beschreibung beschrieben, aufgezeichnet wird.

2. Zusammensetzung nach Anspruch 1, wobei
das in der Zusammensetzung vorliegende Alkalimetallion 6,5 µäq/g bis 10 µäq/g, 2,5 µäq/g bis 6,5 µäq/g oder 1 µäq/g bis 2,5 µäq/g, auf Mikroäquivalente Alkalimetallion pro Gramm (µäq/g) der Zusammensetzung bezogen, beträgt.

3. Zusammensetzung nach Anspruch 1 oder 2, wobei
das Ethylen-Vinylalkohol-Copolymer 30 bis 44 % Wiederholungseinheiten umfasst, die von Ethylen abgeleitet sind; und
das Alkalimetallsalz ein Alkalimetallacetat ist und der Carboxylatanteil Erdalkalimetallcarboxylat ist.

4. Zusammensetzung nach Anspruch 1, 2 oder 3, wobei
der Ethylenvinylalkohol 30 bis 40 % Wiederholungseinheiten, die von Ethylen abgeleitet sind, umfasst;
das Erdalkalimetallcarboxylat Calciumcaprylat ist; und
die Zusammensetzung ein Viskositätsverhältnis von 0,3 bis 1,2 aufweist.

5. Zusammensetzung nach Anspruch 1, 2, 3 oder 4, wobei
das in der Zusammensetzung vorliegende Alkalimetallsalz 6,5 µäq/g bis 10 µäq/g beträgt; und der in der Zusammensetzung vorliegende Carboxylatanteil 0,5 µäq/g bis 4 µäq/g beträgt.

6. Zusammensetzung nach Anspruch 1, 2, 3, 4 oder 5, wobei die Zusammensetzung des weiteren ein Antioxidationsmittel umfasst und eine 1,5 bis 2,5 mil (37 bis 62 pm) dicke Folie, die aus der Zusammensetzung gebildet worden ist, einen Gelgehalt von weniger als 2000 Gelen pro 50 Quadrat-Fuß aufweist.

7. Zusammensetzung nach Anspruch 6, wobei
das Antioxidationsmittel ein gehindertes phenolisches Antioxidationsmittel ist;
das Verhältnis des Alkalimetallsalzes zum Erdalkalimetallsalz 1 bis 20 Äquivalente beträgt;
das Verhältnis des Carboxylatanteils zu dem Erdalkalimetallsalz 0,1 bis 15 Äquivalente beträgt; und
das in der Zusammensetzung vorliegende Erdalkalimetallion 0,5 µäq/g bis 400 µäq/g, auf Mikroäquivalente Erdalkalimetallion pro Gramm der Zusammensetzung bezogen, beträgt.

8. Zusammensetzung nach Anspruch 1, 2, 3 oder 4, wobei
das in der Zusammensetzung vorliegende Alkalimetallion 1 µäq/g bis 2,5 µäq/g beträgt;
das in der Zusammensetzung vorliegende Erdalkalimetallion 0,5 µäq/g bis 4 µäq/g, auf Mikroäquivalente Erdalkalimetallion pro Gramm der Zusammensetzung bezogen, beträgt; und
der in der Zusammensetzung vorliegende Carboxylatanteil 0,5 µäq/g bis 4 µäq/g, auf Mikroäquivalente von Carboxylat pro Gramm der Zusammensetzung bezogen, beträgt.

9. Zusammensetzung nach Anspruch 1, 2, 3, 4 oder 8, wobei das in der Zusammensetzung vorliegende Erdalkalimetallion 2,5 µäq/g bis 4 µäq/g, auf Mikroäquivalente Erdalkalimetallion pro Gramm der Zusammensetzung bezogen, beträgt; und der in der Zusammensetzung vorliegende gesamte Carboxylatanteil 2,5 µäq/g bis 4 µäq/g, auf Mikroäquivalente Carboxylat pro Gramm der Zusammensetzung bezogen, beträgt.

10. Zusammensetzung nach Anspruch 1,2,3 oder 4, wobei
das in der Zusammensetzung vorliegende Alkalimetallion 2,5 µäq/g bis 6,5 µäq/g beträgt;
das in der Zusammensetzung vorliegende Erdalkalimetallion 0,5 µäq/g bis 4 µäq/g, bevorzugt 2,5 µäq/g bis 4 µäq/g, auf Mikroäquivalente Erdalkalimetallion pro Gramm der Zusammensetzung bezogen, beträgt;
der in der Zusammensetzung vorliegende gesamte Carboxylatanteil 0,5 µäq/g bis 4 µäq/g beträgt und
der in der Zusammensetzung vorliegende Carboxylatanteil 2,5 µäq/g bis 4 µäq/g beträgt.

11. Artikel umfassend eine Zusammensetzung wie in einem der Ansprüche 1 bis 10 gekennzeichnet, oder daraus hergestellt; wobei der Artikel eine Einzelschichtstruktur oder Mehrschichtstruktur umfasst; und der Artikel Folie, Platte, Tube, Flasche, Behälter, Rohr, Faser, Schale oder Tasse umfasst.

12. Artikel nach Anspruch 11, wobei
der Artikel aus der Mehrschichtstruktur besteht;
die Struktur eine erste Schicht, eine Klebstoffschicht und eine zweite Schicht umfasst;
die erste Schicht die Zusammensetzung umfasst;
die zweite Schicht ein Thermoplastharz umfasst, bei dem es sich nicht um die Zusammensetzung handelt;
das Thermoplatzharz aus Polyolefin, Polyester, Polyesterelastomer, Polyamid, Polystyrol, Polyvinylchlorid, Polyvinylidenchlorid, Acrylharz, Vinylesterharz, Polyurethanelastomer, Polycarbonat oder Kombinationen von zwei oder mehreren davon besteht; und das Polyolefin aus linearem Polyethylen niedriger Dichte, Polyethylen niedriger Dichte, Polyethylen mittlerer Dichte, Polyethylen hoher Dichte, EthylenVinylacetat-Copolymer, Ethylen-Alkylacrylat-Copolymer, Ethylen-Propylen-Copolymer, Polypropylen, Propylen-α-Olefin-Copolymer, Polybuten, Polypenten, Chlorpolyethylen, Chlorpolypropylen oder Kombinationen von zwei oder mehreren derselben besteht; und
die Klebstoffschicht sich zwischen der ersten Schicht und der zweiten Schicht befindet; und die Haftung zwischen der ersten Schicht und der Klebstoffschicht höher als 300 g/Zoll ist.

13. Verfahren umfassend das Kontaktieren eines nichtmodifizierten Ethylen-Vinylalkohol-Copolymers mit einer Mischung unter einer Bedingung, die wirksam ist, um ein modifiziertes Ethylen-Vinylalkohol-Copolymer zu erzeugen, wobei
das Kontaktieren Schmelzmischen ist;
das nichtmodifizierte Ethylen-Vinylalkohol-Copolymer 20 bis 50 %, auf das Gewicht des Copolymers bezogen, Wiederholungseinheiten umfasst, die von Ethylen abgeleitet sind;
die Mischung mindestens ein Alkalimetallsalz, mindestens ein Erdalkalimetallsalz, mindestens einen Carboxylatanteil aufweist, der 3 bis 18 Kohlenstoffatome aufweist;
das modifizierte Ethylen-Vinylalkohol-Copolymer reduzierte Gele im Vergleich mit dem Ethylen-Vinylalkohol-Copolymer aufweist und dieselben Charakteristiken wie diejenigen, die in irgendeinem der Ansprüche 1 bis 11 aufgeführt sind, aufweist, wobei das vorliegende Gel durch eine automatische "Folientest FSA100"-Gelzähleinheit als die Anzahl von Gelteilchen pro 4,5 m² (50 Quadrat-Fuß) einer 50,8±12,7 µm (2±0,5 mil) dicken Folie, wie in der Beschreibung beschrieben, aufgezeichnet wird;
der gesamte Carboxylatanteil in der Mischung in einer Menge von 0,5 µäq/g bis 10 µäq/g, auf Mikroäquivalente Carboxylat pro Gramm des nichtmodifizierten Ethylen-Vinylalkohol-Copolymers bezogen, vorliegt;
das Verhältnis des Alkalimetallsalzes zu dem Erdalkalimetallsalz 1 bis 20 Äquivalente beträgt; und
das Verhältnis des mindestens einen Carboxylatanteils zu dem Erdalkalimetallsalz 0,1 bis 15 Äquivalente beträgt.

14. Verfahren nach Anspruch 13, wobei
die Mischung des weiteren ein zweites nichtmodifiziertes Ethylen-Vinylalkohol-Copolymer umfasst, das 20 bis 50 %, auf das Gewicht des Copolymers bezogen, Wiederholungseinheiten umfasst, die von Ethylen abgeleitet sind; und
das Verfahren des weiteren das Kontaktieren des modifizierten Vinylalkohol-Copolymers mit nichtmodifiziertem Ethylen-Vinylalkohol-Copolymer umfasst, das 20 bis 50 %, auf das Gewicht des Copolymers bezogen, Wiederholungseinheiten umfasst, die von Ethylen abgeleitet sind;

15. Verfahren zur Herstellung einer modifizierten Ethylen-Vinylalkohol-Copolymerzusammensetzung umfassend: Schmelzmischen einer ersten Zusammensetzung, die ein Ethylen-Vinylalkohol-Copolymer umfasst, das 20 bis 50 %, auf das Gewicht des Copolymers bezogen, Wiederholungseinheiten umfasst, die von Ethylen abgeleitet sind, mit einer Mischung, die mindestens ein Erdalkalimetallcarboxylat, das 3 bis 18 Kohlenstoffatome aufweist; mindestens ein Alkalimetallsalz; und ein Ethylen-Vinylalkohol-Copolymer, das 20 bis 50 % Wiederholungseinheiten, die von Ethylen abgeleitet sind, auf das Gewicht des Copolymers bezogen, umfasst; um eine modifizierte Ethylen-Vinylalkohol-Copolymerzusammensetzung herzustellen, wobei die gesamten Carboxylatanteile, die 3 bis 18 Kohlenstoffatome aufweisen, in einer Menge von 0,5 µäq/g bis 10 µäq/g, auf Mikroäquivalente von Carboxylat pro Gramm der Zusammensetzung bezogen, vorliegen; und wobei die modifizierte Ethylen-Vinylalkohol-Copolymerzusammensetzung reduzierte Gele im Vergleich mit der ersten Zusammensetzung aufweist, wobei das vorliegende Gel durch eine automatische "Folientest FSA100"-Gelzähleinheit als die Anzahl von Gelteilchen pro 4,5 m² (50 Quadrat-Fuß) einer 50,8±12,7 µm (2±0,5 mil) dicken Folie, wie in der Beschreibung beschrieben, aufgezeichnet wird.

## Revendications

1. Composition comprenant ou produite à partir d'un copolymère d'éthylène-alcool de vinyle et d'un mélange dans laquelle
le copolymère d'éthylène-alcool de vinyle comprend 20 à 50 %, en poids du copolymère, de motifs de répétition dérivés de l'éthylène;
le mélange comprend au moins un sel de métal alcalin, au moins un sel de métal alcalino-terreux, et au moins une fraction carboxylate ayant 3 à 18 atomes de carbone;
l'ion de métal alcalin présent dans la composition représente 1 µéq/g à 10 µéq/g, sur la base des micro-équivalents d'ion de métal alcalin par gramme (µéq/g) de la composition;
la fraction carboxylate est présente dans la composition de 0,5 µéq/g à 7 µéq/g, sur la base des micro-équivalents du carboxylate par gramme de la composition; et
la composition présente une formation réduite de gel, telle que comparée au copolymère d'éthylène-alcool de vinyle dans lequel le gel présent est enregistré par une unité automatique de comptage de gel « Film Test FSA100 » comme étant le nombre de particules de gel pour 4,5 m² (50 pieds carrés) d'un film épais de 50,8 ± 12,7 µm (2 ± 0,5 mils) tel que décrit dans la description.

2. Composition selon la revendication 1, dans laquelle
l'ion de métal alcalin présent dans la composition est 6,5 µéq/g à 10 µéq/g, 2,5 µéq/g à 6,5 µéq/g, ou 1 µéq/g à 2,5 µéq/g, sur la base des micro-équivalents d'ion de métal alcalin par gramme (µéq/g) de la composition.

3. Composition selon la revendication 1 ou 2, dans laquelle
le copolymère d'éthylène-alcool de vinyle comprend 30 à 44 % de motifs de répétition dérivés de l'éthylène; et
le sel de métal alcalin est un acétate de métal alcalin et la fraction carboxylate est un carboxylate de métal alcalino-terreux.

4. Composition selon la revendication 1, 2 ou 3, dans laquelle
l'éthylène-alcool de vinyle comprend 30 à 40 % de motifs de répétition dérivés de l'éthylène,
le carboxylate de métal alcalino-terreux est le caprylate de calcium; et
la composition a un indice de viscosité de 0,3 à 1,2.

5. Composition selon la revendication 1, 2, 3, ou 4, dans laquelle
le sel de métal alcalin présent dans la composition est de 6,5 µéq/g à 10 µéq/g; et la fraction carboxylate présente dans la composition est de 0,5 µéq/g à 4 µéq/g.

6. Composition selon la revendication 1, 2, 3, 4, ou 5, dans laquelle la composition
comprend en outre un antioxydant et un film épais de 1,5 à 2,5 mils (37 à 62 pm) fabriqué à partir de la composition a une teneur en gel inférieure à 2 000 gels pour 50 pieds carrés.

7. Composition selon la revendication 6, dans laquelle
l'antioxydant est un antioxydant phénolique bloqué;
le rapport du sel de métal alcalin au sel de métal alcalino-terreux est de 1 à 20 équivalent(s);
le rapport de la fraction carboxylate au sel de métal alcalino-terreux est de 0,1 à 15 équivalent(s); et
l'ion de métal alcalino-terreux présent dans la composition est de 0,5 µéq/g à 400 µéq/g, sur la base des micro-équivalents de l'ion de métal alcalino-terreux par gramme de la composition.

8. Composition selon la revendication 1, 2, 3, ou 4, dans laquelle
l'ion de métal alcalin présent dans la composition est de 1 µéq/g à 2,5 µéq/g;
l'ion de métal alcalino-terreux présent dans la composition est de 0,5 µéq/g à 4 µéq/g, sur la base des micro-équivalents de l'ion de métal alcalino-terreux par gramme de la composition; et
la fraction carboxylate présente dans la composition est de 0,5 µéq/g à 4 µéq/g, sur la base des micro-équivalents du carboxylate par gramme de la composition.

9. Composition selon la revendication 1, 2, 3, 4 ou 8, dans laquelle l'ion de métal alcalino-terreux présent dans la composition est de 2,5 µéq/g à 4 µéq/g, sur la base des micro-équivalents de l'ion de métal alcalino-terreux par gramme de la composition; et la fraction carboxylate totale dans la composition est de 2,5 µéq/g à 4 µéq/g, sur la base des micro-équivalents de carboxylate par gramme de la composition.

10. Composition selon la revendication 1, 2, 3 ou 4, dans laquelle
l'ion de métal alcalin présent dans la composition est de 2,5 µéq/g à 6,5 µéq/g;
l'ion de métal alcalino-terreux présent dans la composition est de 0,5 µéq/g à 4 µéq/g, de préférence de 2,5 µéq/g à 4 µéq/g, sur la base des micro-équivalents de l'ion de métal alcalino-terreux par gramme de la composition;
la fraction carboxylate totale présente dans la composition est de 0,5 µéq/g à 4 µéq/g; et
la fraction carboxylate présente dans la composition est de 2,5 µéq/g à 4 µéq/g.

11. Article comprenant ou produit à partir d'une composition telle que caractérisée selon l'une quelconque des revendications 1 à 10; l'article comprend une structure monocouche ou une structure multicouche; et l'article comprend un film, une feuille, un tube, une bouteille, un récipient, une conduite, une fibre, un plateau, ou une tasse.

12. Article selon la revendication 11, dans lequel
l'article est la structure multicouche;
la structure comprend une première couche, une couche adhésive et une seconde couche;
la première couche comprend la composition;
la seconde couche comprend une résine thermoplastique autre que la composition; la résine thermoplastique est une polyoléfine, un polyester, un élastomère de polyester, un polyamide, un polystyrène, un poly(chlorure de vinyle), un poly(chlorure de vinylidène), une résine acrylique, une résine ester de vinyle, un élastomère de polyuréthane, un polycarbonate, ou des combinaisons de deux ou plusieurs d'entre eux; et la polyoléfine est un polyéthylène linéaire de faible densité, un polyéthylène de faible densité, un polyéthylène de densité moyenne, un polyéthylène de densité élevée, un copolymère d'éthylène-acétate de vinyle, un copolymère d'éthylène-acrylate d'alkyle, un copolymère d'éthylène-propylène, un polypropylène, un copolymère de propylène-α-oléfine, un polybutène, un polypentène, un chloropolyéthylène, un chloropolypropylène, ou des combinaisons de deux ou plusieurs d'entre eux; et
la couche adhésive est comprise entre la première couche et la seconde couche; et l'adhésion entre la première couche et la couche adhésive est supérieure à 300 g/po.

13. Procédé comprenant la mise en contact d'un copolymère non modifié d'éthylène-alcool de vinyle avec un mélange sous des conditions efficaces pour produire un copolymère modifié d'éthylène-alcool de vinyle, dans lequel
la mise en contact s'effectue par mélange à l'état fondu;
le copolymère non modifié d'éthylène-alcool de vinyle comprend 20 à 50 %, en poids du copolymère, de motifs de répétition dérivés de l'éthylène;
le mélange comprend au moins un sel de métal alcalin; au moins un sel de métal alcalino-terreux; au moins une fraction carboxylate ayant 3 à 18 atomes de carbone;
le copolymère modifié d'éthylène-alcool de vinyle a des gels réduits comparé au copolymère d'éthylène-alcool de vinyle et a la même caractéristique qu'énoncé selon l'une quelconque des revendications 1 à 11, dans lequel le gel présent est enregistré par une unité automatique de comptage de gel « Film Test FSA100 » comme étant le nombre de particules de gel pour 4,5 m² (50 pieds carrés) d'un film épais de 50,8 ± 12,7 µm (2 ± 0,5 mils) tel que décrit dans la description;
la fraction carboxylate totale est présente dans le mélange de 0,5 µéq/g à 10 µéq/g, sur la base des micro-équivalents de carboxylate par gramme du copolymère non modifié d'éthylène-alcool de vinyle,
le rapport du sel de métal alcalin au sel de métal alcalino-terreux étant de 1 à 20 équivalent(s); et
le rapport d'au moins une fraction carboxylate sur le sel de métal alcalino-terreux est de 0,1 à 15 équivalent(s).

14. Procédé selon la revendication 13, dans lequel
le mélange comprend en outre un second copolymère non modifié d'éthylène-alcool de vinyle, qui comprend 20 à 50 %, en poids du copolymère, de motifs de répétition dérivés de l'éthylène; et
le procédé comprend en outre la mise en contact du copolymère modifié d'éthylène-alcool de vinyle avec le copolymère non modifié d'éthylène-alcool de vinyle, qui comprend 20 à 50 %, en poids du copolymère, de motifs de répétition dérivés de l'éthylène.

15. Procédé de préparation d'une composition de copolymère modifié d'éthylène-alcool de vinyle comprenant: un mélange à l'état fondu d'une première composition comprenant un copolymère d'éthylène-alcool de vinyle, comprenant 20 à 50 %, en poids du copolymère, de motifs de répétition dérivés de l'éthylène, avec un mélange comprenant au moins un carboxylate de métal alcalino-terreux ayant 3 à 18 atomes de carbone; au moins un sel de métal alcalin; et un copolymère d'éthylène-alcool de vinyle comprenant 20 à 50 % de motifs de répétition dérivés de l'éthylène, en poids du copolymère; pour produire une composition de copolymère modifié d'éthylène-alcool de vinyle, dans laquelle les fractions carboxylate totales ayant 3 à 18 atomes de carbone sont de 0,5 µéq/g à 10 µéq/g, sur la base des micro-équivalents de carboxylate par gramme de la composition; et dans lequel la composition de copolymère modifié d'éthylène-alcool de vinyle a une teneur réduite en gels comparée à la première composition dans laquelle le gel présent est enregistré par une unité automatique de comptage de gel « Film Test FSA100 » sous la forme du nombre de particules de gel pour 4,5 m² (50 pieds carrés) d'un film épais de 50,8 ± 12,7 µm (2 ± 0,5 mils) tel que décrit dans la description.
